(19) Europäisches Patentamt
European Patent Office
Office européen des brevets

(11) EP 4 369 062 B1

(12) # EUROPEAN PATENT SPECIFICATION

(45) Date of publication and mention of the grant of the patent:
**06.08.2025 Bulletin 2025/32**

(21) Application number: **22315287.7**

(22) Date of filing: **14.11.2022**

(51) International Patent Classification (IPC):
***C09D 183/04*** *(2006.01)* ***G02B 1/111*** *(2015.01)*

(52) Cooperative Patent Classification (CPC):
**G02B 1/111; C09D 183/04**

(54) **ARTICLE COATED WITH A LOW REFRACTIVE INDEX LAYER BASED ON ORGANIC SILSESQUIOXANE COMPOUNDS**

GEGENSTAND BESCHICHTET MIT EINER SCHICHT MIT NIEDRIGEM BRECHUNGSINDEX AUF BASIS VON ORGANISCHEN SILSESQUIOXANVERBINDUNGEN

ARTICLE REVÊTU D'UNE COUCHE À FAIBLE INDICE DE RÉFRACTION À BASE DE COMPOSÉS SILSESQUIOXANES ORGANIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**15.05.2024 Bulletin 2024/20**

(73) Proprietors:
- **Essilor International**
  **94220 Charenton-Le-Pont (FR)**
- **Corporation de L'Ecole Polytechnique de Montreal**
  **Montréal, Québec H3T 1J4 (CA)**

(72) Inventors:
- **Shelemin, Artem**
  **Granby, Québec, J2H 3J4 (CA)**
- **Zabeida, Oleg**
  **Côte Saint-Luc, Québec, H4V 2G9 (CA)**
- **Martinu, Ludvik**
  **Montréal, Québec, H3W 2B4 (CA)**
- **Maitre, Nicolas**
  **78700 Conflans-Sainte-Honorine (FR)**
- **Trottier-Lapointe, William**
  **Montréal, Québec, H4C 2H2 (CA)**

(74) Representative: **Jacobacci Coralis Harle**
**32, rue de l'Arcade**
**75008 Paris (FR)**

(56) References cited:
**US-A1- 2014 046 084** **US-B2- 8 163 357**
**US-B2- 9 080 017**

- **KIM NAMIL: "Recent progress of functional coating materials and technologies for polycarbonate", JOURNAL OF COATINGS TECHNOLOGY AND RESEARCH, SPRINGER NEW YORK LLC, US, vol. 14, no. 1, 29 November 2016 (2016-11-29), pages 21 - 34, XP036140582, ISSN: 1547-0091, [retrieved on 20161129], DOI: 10.1007/S11998-016-9837-X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 369 062 B1

## Description

The present invention generally relates to an article, preferably an optical article, especially an ophthalmic lens, having an organic layer based on organosilicon compounds, which combines very good mechanical properties, thermal resistance and a low refractive index, and to a process for producing such an article.

It is known to coat mineral or organic optical articles such as ophthalmic lenses or screens with interferential coatings, in particular antireflective coatings, which are generally formed by a multilayer stack of dielectric mineral materials such as SiO, $SiO_2$, $Si_3N_4$, $TiO_2$, $ZrO_2$, $Al_2O_3$, $MgF_2$ or $Ta_2O_5$.

An antireflective coating prevents the formation of parasitic reflections which are a nuisance to the wearer and the people he/she is interacting with, in the case of an ophthalmic lens.

A reflective coating produces the reverse effect; that is to say that it increases the reflection of the light rays. Such a type of coating is used, for example, to obtain a mirror effect in sunglass lenses.

One of the problems encountered with any type of mineral interferential coating, this type of coating generally being deposited by vacuum evaporation or by sputtering, is its high fragility from a mechanical point of view, mainly due to its mineral nature. These coatings are internally strained to a greater or lesser extent and may find it difficult to undergo a deformation or a substantial dilation, because the stress experienced often results in a problem with adhesion and/or cracking that propagates over all of the area of the coating, generally making it unusable, this problem getting worse as the thickness of the layers increases.

For example, during the edging and fitting of a glass by an optician, the glass undergoes mechanical deformations that may produce cracks in mineral interferential coatings, in particular when the operation is not carried out with care. Similarly, thermal stresses (heating of the frame) may produce cracks in the interferential coating. Depending on the number and the size of the cracks, the latter may mar the field of view of the wearer and prevent the glass from being sold.

The application WO 2013/098531, on behalf of the applicant, describes an article having improved thermomechanical performances, comprising a substrate having at least one main surface coated with a multilayer interferential coating, said coating comprising a layer A not formed from inorganic precursor compounds having a refractive index of less than or equal to 1.55, which can constitute the external layer of the interferential coating, and which has been obtained by deposition, under an ion beam, of activated species resulting from at least one organosilicon precursor compound in gaseous form, such as octamethylcyclotetrasiloxane (OMCTS).

Patent applications WO 2014/199103, WO 2017/021670 and WO 2020/161128, in the name of the applicants, describe a multilayer interferential coating obtained through a similar technology, comprising at least one layer obtained from an organosilicon precursor such as 2,4,6,8-tetramethylcyclotetrasiloxane (TMCTS), decamethyltetrasiloxane (DMTS) or 1,3,5-tris(3,3,3-trifluoropropyl)-1,3,5-trimethylcyclotrisiloxane (FCTS).

These layers based on organosilicon compounds have interesting mechanical properties, but there is still a need to further improve thermal resistance, and in practice, their refractive indexes are too high, generally over 1.50, typically.1.52, leading to lower optical performance in antireflective coatings.

Indeed, the use of materials having a sufficiently low refractive index ($n \leq 1.50$) in antireflective coatings is advantageous, since the lower the refractive index, the better the optical performance. For example, $SiO_2$, which has a refractive index of 1.48 at 500 nm, has better antireflection performance, but lower mechanical properties, in particular lower elasticity.

Another existing low refractive index material, $MgF_2$, generally needs to be heated at high temperature, such as 250°C, to get good adhesion properties, which prevents its use on organic substrate materials. Further, $MgF_2$ is sensitive to water when deposited at low temperature, such as the low temperatures required for polymer deposition.

The use of hollow or porous materials is another solution to ensure a low refractive index, but they are generally very water sensitive. As an alternative, materials deposited by glancing angle deposition can be employed, but their mechanical properties are not sufficient due to their porosity.

Polyhedral silsesquioxane compounds are organic materials that have been mainly used for surface functionalization (liquid-repellent coatings in EP 3337859 or semiconductor/integrated circuit surfaces in EP 1271634), combustion deposition (EP 2242730) or as a nanodispersed phase blended in organic monomers for making a coating by liquid deposition US 9939557).

US 8 163 357 B2 describes scratch resistant coatings for an ophthalmic lens comprising a polymer including a polysilsesquioxane, wherein the coating is chemically modified by exposure to oxidizing conditions.

An objective of the present invention is to propose an efficient means for satisfactorily reducing the inherent fragility of mineral interferential coatings. The invention aims at obtaining a coating, in particular an interferential coating, and especially an antireflection coating, having a layer with a low refractive index while preserving high thermomechanical and durability properties. In particular, the invention relates to articles possessing an improved critical temperature, i.e., having a good resistance to cracking when they are subjected to a temperature increase.

Another objective of the invention is to provide a process for manufacturing an interferential coating, which process is simple, easy to implement and reproducible.

The inventors have discovered that modifying the nature of one or more inorganic layers of the interferential coating, namely at least one low refractive index layer, typically a silica layer, allows the targeted objectives to be achieved. According to the invention, this low refractive index layer is a hybrid layer formed by deposition, under an ion beam, of activated species, which species are obtained from silsesquioxane organic precursor materials in gaseous form, preferably in the absence of inorganic precursors.

To address the needs of the present invention and to remedy to the mentioned drawbacks of the prior art, the applicant provides an article comprising a substrate having at least one main surface coated with a layer A having a refractive index lower than or equal to 1.55, said layer A being obtained by deposition of activated species issued from at least one compound C in gaseous form having the following formula:

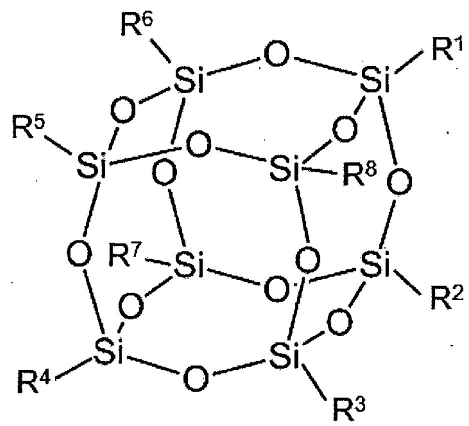

where $R^1$, $R^2$, $R^3$, $R^4$, $R^5$, $R^6$, $R^7$, $R^8$ are independently selected from the group consisting of alkyl, aryl, vinyl, acrylic, methacrylic, substituted alkyl, and $-OSiR^aR^bR^c$ in which $R^a$, $R^b$ and $R^c$ independently represent H, alkyl, vinyl, aryl, hydroxyl or a hydrolyzable group, with the proviso that $R^a$, $R^b$ and $R^c$ are not all selected from H or a hydrolyzable group, the deposition of said layer A being carried out by applying a bombardment with an ion beam to layer A while layer A is being formed.

The foregoing and other objects, features and advantages of the present invention will become readily apparent to those skilled in the art from a reading of the detailed description hereafter when considered in conjunction with the accompanying drawings, wherein figure 1 shows FTIR spectra of layers formed from evaporation of the inventive silsesquioxane compound of formula (IV) at different ion assistance conditions.

## Detailed description of the invention

In the present application, when an article has one or more coatings on its surface, the expression "to deposit a layer or a coating on the article" is understood to mean that a layer or a coating is deposited on the uncovered (exposed) surface of the external coating of the article, i.e., its coating furthest from the substrate.

A coating that is "on" a substrate or that has been deposited "on" a substrate is defined as a coating that (i) is positioned above the substrate, (ii) does not necessarily make contact with the substrate (although preferably it does), i.e. one or more intermediate coatings may be arranged between the substrate and the coating in question, and (iii) does not necessarily completely cover the substrate (although preferably it will do). When "a layer 1 is located under a layer 2", it will be understood that the layer 2 is further from the substrate than the layer 1.

The article produced according to the invention comprises a substrate, preferably a transparent substrate, having front and rear main faces, at least one of said main faces and preferably both main faces comprising a layer A.

The "rear face" of the substrate (the rear face is generally concave) is understood to be the face that, when the article is being used, is closest to the eye of the wearer. Conversely, the "front face" of the substrate (the front face is generally convex) is understood to be the face that, when the article is being used, is furthest from the eye of the wearer.

Although the article according to the invention may be any type of article, such as a screen, a glazing unit, a pair of protective glasses that may especially be used in a working environment, a mirror, or an article used in electronics (e.g., OLED), it is preferably an optical article, more preferably an optical lens, and even more preferably an ophthalmic lens for a pair of spectacles, or a blank optical or ophthalmic lens such as a semi-finished optical lens, and in particular a spectacle glass. The lens may be a polarized or tinted lens or a photochromic lens. Preferably, the ophthalmic lens according to the invention has a high transmission.

The layer A according to the invention may be formed on at least one of the main faces of a bare substrate, i.e., an uncoated substrate, or on at least one of the main faces of a substrate already coated with one or more functional coatings.

The substrate of the article according to the invention is preferably an organic eyeglass, for example made of thermoplastic or thermosetting plastic. This substrate may be chosen from the substrates mentioned in patent application WO 2008/062142, and may for example be a substrate obtained by (co)polymerization of diethyleneglycol bis-allylcarbonate, a poly(thio)urethane substrate or a substrate made of (thermoplastic) bis-phenol-A polycarbonate (PC).

Before the layer A is deposited on at least one main face of the substrate, which is optionally coated, for example with an anti-abrasion and/or anti-scratch coating, it is common to subject the surface of said optionally coated substrate to a physical or chemical activation treatment intended to increase the adhesion of the layer A. This pretreatment is generally carried out under vacuum. It may be a question of a bombardment with energetic and/or reactive species, for example an ion beam (ion pre-cleaning or IPC) or an electron beam, a corona discharge treatment, a glow discharge treatment, a UV treatment or treatment in a low-pressure vacuum plasma, generally an oxygen or argon plasma, while other gases like nitrogen can be present. It may also be a question of an acidic or basic surface treatment and/or a treatment with solvents (water or organic solvent(s)). Several of these treatments may be combined. By virtue of these cleaning treatments, the cleanliness and the reactivity of the surface of the substrate are optimized.

The term "energetic species" (and/or "reactive species") is particularly understood to mean ionic species having an energy ranging from 1 to 300 eV, preferably from 1 to 150 eV, better still from 10 to 150 eV and even better still from 40 to 150 eV. The energetic species may be chemical species, such as ions, radicals, or species such as photons or electrons.

The preferred pre-treatment of the surface of the substrate is an ion bombardment treatment carried out by means of an ion gun, the ions being particles formed from gas atoms from which one or more electrons have been stripped. Argon is preferably used as the gas ionized ($Ar^+$ ions), though oxygen or a mixture of oxygen and argon may also be used, under an acceleration voltage generally ranging from 50 to 200 V, a current density generally contained between 10 and 100 $\mu A/cm^2$ at the activated surface, and generally under a residual pressure in the vacuum chamber possibly ranging from $8x10^{-5}$ mbar to $2\times10^{-4}$ mbar.

The article according to the invention comprises a layer A that preferably constitutes a monolayer interferential coating or a layer of a multilayer interferential coating (preferably its external layer, i.e., the layer of the interferential coating furthest from the substrate in the stacking order), preferably a multilayer interferential coating. Said interferential coating is preferably formed on an abrasion resistant and/or scratch resistant coating, those coatings being preferably based on epoxysilane hydrolysates containing at least two and preferably at least three hydrolyzable groups, bonded to the silicon atom, are preferred. The hydrolyzable groups are preferably alkoxysilane groups.

The interferential coating may be any interferential coating conventionally used in the field of optics, in particular ophthalmic optics, provided that it contains a layer A formed by depositing, under an ion beam, activated species issued from at least one organic compound C in gaseous form (preferably in external position). The interferential coating may be, nonlimitingly, an antireflection coating, a reflective (mirror) coating, an infrared filter or an ultraviolet filter, an antireflective coating in the visible range but filtering ultraviolet and/or blue light and/or infrared light. It is preferably an antireflective coating.

Layer A according to the invention can be used in interferential coatings for replacing conventional low refractive index materials such as silica, e.g., for obtaining a better performing interferential coating. Layer A may be located in various places in the interferential coating. In one embodiment, the interferential coating is a monolayer interferential coating consisting of layer A. In another embodiment, the interferential coating is a multilayer interferential coating, the outermost (external) layer of which being preferably a layer A according to the invention, i.e., the layer of the interferential coating furthest from the substrate in the stacking order. In another embodiment, the layer A is a sub-layer of the interferential coating.

In one embodiment, the interferential coating comprises one layer A, preferably as an outermost layer. In another embodiment, the interferential coating comprises at least two layers A, identical or different, in composition and/or thickness.

An antireflection coating is a coating, deposited on the surface of an article, which improves the antireflection properties of the final article. It reduces the reflection of light at the article/air interface over a relatively broad portion of the visible spectrum.

As is well known, these interferential (preferably antireflection) coatings conventionally contain a monolayer or multilayer stack of dielectric materials. These are preferably multilayer coatings, comprising layers with a high refractive index (HI) and layers with a low refractive index (LI).

In the present patent application, a layer of the interferential coating is said to be a high refractive index layer when its refractive index is higher than 1.55, preferably higher than or equal to 1.6, more preferably higher than or equal to 1.8 and even more preferably higher than or equal to 2.0. A layer of an interferential coating is said to be a low refractive index layer when its refractive index is lower than or equal to 1.55, preferably lower than or equal to 1.50 and more preferably lower than or equal to 1.45. Unless otherwise indicated, the refractive indices to which reference is made in the present invention are expressed at 25°C for a wavelength of 550 nm.

The HI layers are conventional high refractive index layers, well known in the art. They generally contain one or more mineral oxides such as, nonlimitingly, zirconia ($ZrO_2$), titanium oxide ($TiO_2$), tantalum pentoxide ($Ta_2O_5$), neodymium

oxide ($Nd_2O_5$), hafnium oxide ($HfO_2$), praseodymium oxide ($Pr_2O_3$), praseodymium titanate ($PrTiO_3$), $La_2O_3$, $Nb_2O_5$, $Y_2O_3$, indium oxide $In_2O_3$, or tin oxide $SnO_2$. Preferred materials are $TiO_2$, $Ta_2O_5$, $PrTiO_3$, $ZrO_2$, $SnO_2$, $In_2O_3$ and their mixtures.

The LI layers are also well-known layers and may contain, nonlimitingly, $SiO_2$, $MgF_2$, $ZrF_4$, alumina ($Al_2O_3$) in a small proportion, $AlF_3$ and their mixtures, but are preferably $SiO_2$ layers. Layers made of SiOF (fluorine-doped $SiO_2$) may also be used.

Generally, the HI layers have a physical thickness ranging from 10 nm to 120 nm and the LI layers have a physical thickness ranging from 10 nm to 125 nm, preferably from 10 nm to 125 nm.

The total thickness of the interferential coating is preferably smaller than 1 micron, more preferably smaller than or equal to 800 nm and even more preferably smaller than or equal to 500 nm. The total thickness of the interferential coating is generally larger than 100 nm, and preferably larger than 150 nm.

Even more preferably, the interferential coating, which is preferably an antireflection coating, contains at least two low refractive index (LI) layers and at least two high refractive index (HI) layers. The total number of layers in the interferential coating is preferably smaller than or equal to 8 and more preferably smaller than or equal to 6.

The HI and LI layers need not be alternated in the interferential coating though they may be in one embodiment of the invention. Two (or more) HI layers may be deposited on each other just as two (or more) LI layers may be deposited on each other.

Preferably, all the low refractive index layers of the interferential coating according to the invention except for the layer A are inorganic in nature (i.e., the other low refractive index layers of the interferential coating preferably do not contain any organic compounds).

Preferably, all the layers of the interferential coating according to the invention except for the layer A are inorganic in nature, or in other words the layer A is preferably the only layer of organic nature in the interferential coating of the invention (the other layers of the interferential coating preferably containing no organic compounds).

According to one embodiment of the invention, the interferential coating comprises a sub-layer. In this case, the sub-layer generally forms the first layer of this interferential coating in the order of deposition of the layers, i.e., the sub-layer is the layer of the interferential coating that makes contact with the underlying coating (which is generally an anti-abrasion and/or anti-scratch coating), or with the substrate when the interferential coating is deposited directly on the substrate.

The expression "sub-layer of the interferential coating" is understood to mean a coating of relatively large thickness used with the aim of improving the resistance of said coating to abrasion and/or scratches and/or to promote adhesion of the coating to the substrate or to the underlying coating. The sub-layer according to the invention may be chosen from the sub-layers described in patent application WO 2010/109154. Preferably, the sub-layer is between 100 to 200 nm in thickness. It is preferably exclusively mineral in nature and is preferably made of silica $SiO_2$.

In one embodiment, one or more so-called "impedance layers" (or adaptation layers also known as layers reducing the interference fringes) are interleaved between the sub-layer and the underlying coating (or the substrate), thus forming an impedance coating that limits interference fringes due to differences of refractive indices between the sub-layer and the underlying coating or substrate. The embodiment in which the interferential coating comprises impedance layers is fully described in WO 2018/192998.

The article of the invention may be made antistatic by incorporating at least one electrically conductive layer into the interferential coating. The term "antistatic" is understood to mean the property of not storing and/or building up an appreciable electrostatic charge. An article is generally considered to have acceptable antistatic properties when it does not attract and hold dust and small particles after one of its surfaces has been rubbed with an appropriate cloth.

The electrically conductive layer may be located in various places in the interferential coating, provided that this does not interfere with the antireflection properties of the latter. It may for example be deposited on the sub-layer of the interferential coating, if a sub-layer is present. It is preferably located between two dielectric layers of the interferential coating, and/or under a low refractive index layer of the interferential coating.

The electrically conductive layer must be sufficiently thin not to decrease the transparency of the interferential coating. Generally, its thickness ranges from 0.1 to 150 nm and preferably from 0.1 to 50 nm depending on its nature. A thickness smaller than 0.1 nm generally does not allow sufficient electrical conductivity to be obtained, whereas a thickness larger than 150 nm generally does not allow the required transparency and low-absorption properties to be obtained.

The electrically conductive layer is preferably made from an electrically conductive and highly transparent material. In this case, its thickness preferably ranges from 0.1 to 30 nm, more preferably from 1 to 20 nm and even more preferably from 2 to 15 nm. The electrically conductive layer preferably contains a metal oxide chosen from indium oxide, tin oxide, zinc oxide and their mixtures. Indium tin oxide (tin-doped indium oxide, $In_2O_3$:Sn), indium oxide ($In_2O_3$), and tin oxide $SnO_2$ are preferred. According to one optimal embodiment, the electrically conductive and optically transparent layer is a layer of indium tin oxide (ITO).

Generally, the electrically conductive layer contributes to the antireflection properties obtained and forms a high refractive index layer in the interferential coating. This is the case for layers made from an electrically conductive and highly

transparent material such as layers of ITO.

The electrically conductive layer may also be a very thin layer of a noble metal (Ag, Au, Pt, etc.) typically smaller than 1 nm in thickness and preferably less than 0.5 nm in thickness.

The various layers of the interferential coating (including the optional antistatic layer) other than the layer A are preferably deposited by vacuum deposition using one of the following techniques: i) evaporation, optionally ion-assisted evaporation, ii) ion-beam sputtering, iii) cathode sputtering or iv) plasma-enhanced chemical vapor deposition. These various techniques are described in the books "Thin Film Processes" and "Thin Film Processes II", edited by Vossen and Kern, Academic Press, 1978 and 1991, respectively. The vacuum evaporation technique is particularly recommended.

Preferably, each of the layers of the interferential coating is deposited by vacuum evaporation.

Optionally, the deposition of one or more of the layers is performed by supplying (a supplementary) gas during the deposition step of the layer in a vacuum chamber, such as disclosed in US 2008/206470. Concretely, an additional gas such as a rare gas, for example argon, krypton, xenon, neon; a gas such as oxygen, nitrogen, or mixtures of two gases or more amongst these, is or are introduced into the vacuum deposition chamber while the layer is being deposited. The gas employed during this deposition step is not an ionized gas, more preferably not an activated gas.

This gas supply makes it possible to regulate the pressure and differs from an ionic bombardment treatment, such as ion assistance. It generally enables the limitation of stress in the interferential coating and to reinforce the adhesion of the layers. When such deposition method is used, which is called deposition under gas pressure regulation, it is preferred to work under an oxygen atmosphere (so called "passive oxygen"). The use of an additional gas supply during the deposition of a layer produces a layer that is structurally different from a layer deposited without additional gas supply.

The layer A is a low refractive index layer as defined according to the invention since it has a refractive index $\leq$ 1.55. In some embodiments of the invention, the refractive index of the layer A is preferably lower than or equal to any one of the following values: 1.50, 1.49, 1.48, 1.47.

The layer A is obtained by deposition of activated species originating from at least one compound C, in gaseous form. Further, the deposition of said layer A is carried out by applying a bombardment with an ion beam to layer A while layer A is being formed (ionic assistance, or "IAD"), and said layer A is preferably not formed from inorganic precursor compounds.

Layer A contains in its structure silicon, oxygen, preferably carbon, and optionally nitrogen.

Preferably, the deposition is carried out in a vacuum chamber comprising an ion gun directed toward the substrates to be coated, which emits, toward said substrates, a beam of positive ions generated in a plasma within the ion gun. Preferably, the ions issued from the ion gun are particles formed by gas atoms from which one or more electrons have been stripped, the gas being a noble gas, such as argon, oxygen or a mixture of two or more of these gases.

In one embodiment, the deposition of layer A is carried out by applying a bombardment with an ion beam comprising oxygen ions. In another embodiment, the deposition of layer A is carried out by applying a bombardment with an ion beam comprising noble gas ions, preferably argon ions, with or without oxygen ions.

A precursor, the compound C, is sublimated from the solid state (generally powder) to the gaseous state in the vacuum chamber, and is activated under the effect of the ion gun. The ion beam dissociates the precursor molecule in the gas phase and let the fragments react on the deposition surface to form a film.

Without wishing to be limited to any one theory, the inventors think that the plasma of the ion gun is concentrated in the zone between the anode and cathode, without however reaching the substrates to be coated. It projects a beam of ions accompanied by electrons to keep it quasi-neutral. The ion beam occupies much larger volume than the initial plasma, and activation/disassociation of the precursor compound C takes place preferentially in this zone, and on the surface of depositing film.

This deposition technique using an ion gun and a gaseous precursor, sometimes referred to as "ion beam deposition", or "ion assisted deposition" is especially described in the patent US 5508368.

According to the invention, the ion gun is preferably the only place in the chamber where a plasma is generated.

The ion beam may, if required, be neutralized before it exits the ion gun. In this case, the bombardment is still considered to be ion bombardment as ions are still sent to the surface independently of the electrons. Generally, the ion bombardment causes atomic rearrangement in and a densification of the layer being deposited, tamping it down while it is being formed.

During the implementation of the process according to the invention, the surface to be treated is preferably bombarded by ions with a current density generally comprised between 20 and 1000 $\mu A/cm^2$, preferably between 30 and 500 $\mu A/cm^2$, more preferably between 30 and 200 $\mu A/cm^2$ at the activated surface and generally under a residual pressure in the vacuum chamber possibly ranging from $6\times10^{-5}$ mbar to $2x10^{-4}$ mbar and preferably from $8\times10^{-5}$ mbar to $2\times10^{-4}$ mbar. An argon and/or oxygen ion beam is preferably used. When a mixture of noble gas and oxygen is used, the amount of oxygen preferably ranges from 0.1 to 40 % by volume, more preferably from 0.1 to 5, 10, 20 or 30 % by volume. It preferably ranges from 1 to 10 % by volume. This ratio may be controlled by adjusting the gas flow rates in the ion gun. The argon flow rate preferably ranges from 5 to 30 sccm. The oxygen $O_2$ flow rate preferably ranges from 0 to 30 sccm, and rises in proportion to the flow rate of the precursor compound of the layer A.

The ions of the ion beam, which are preferably issued from an ion gun used during the deposition of the layer A, preferably have an energy ranging from 75 to 150 eV, more preferably from 80 to 140 eV and even more preferably from 90 to 110 eV. The activated species formed are typically radicals or ions.

The technique of the invention differs from a deposition by means of a plasma (PECVD for example) in that it involves a bombardment, by means of an ion beam, of the layer A being formed, which beam is preferably emitted by an ion gun. The present technique possesses several advantages compared with chemical vapor deposition process, e.g., less contamination of ion source, and as a result, better reproducibility of the discharge parameters, and lower material investments.

In addition to the ion bombardment during the deposition, it is possible to carry out a plasma treatment, optionally concomitant with the deposition under ion beam, of the layer A. The layer A is preferably deposited without the plasma assistance at the substrate level.

Said layer A can be deposited in the presence of a nitrogen source when the precursor compound C does not contain (or does not contain enough) nitrogen atoms and it is desired for the layer A to contain a certain proportion of nitrogen.

Apart from the layer A, other layers of the interferential coating may be deposited under an ion beam. The evaporation of the precursor materials of the layer A, carried out under vacuum, may be achieved using a joule-effect heat source.

The precursor material of the layer A comprises at least one compound C, containing in its structure silicon, carbon, oxygen, optionally at least one hydrogen atom and optionally at least one nitrogen atom. The compound C is an organosilicon compound and is considered as being organic in nature in the present application.

The concentration of each chemical element (Si, O, C, H, N...) in the layer A may be determined using the Rutherford backscattering spectrometry technique (RBS), elastic recoil detection analysis (ERDA) or X-Ray photoelectron spectroscopy (XPS).

The atomic percentage of carbon atoms in the layer A is preferably lower than 40 %, more preferably lower than 35 %. It preferably ranges from 3 to 40 %, more preferably from 20 to 35 %. The atomic percentage of silicon atoms in the layer A preferably ranges from 10 to 45 % and more preferably from 20 to 40 % or from 25 to 35 %. The atomic percentage of oxygen atoms in the layer A is preferably higher than 30 %, more preferably higher than 35 %. It preferably ranges from 30 to 60 %, more preferably ranges from 35 to 50 %.

The O/Si atomic ratio in layer A preferably ranges from 1 to 3, preferably from 1.25 to 2. The C/Si atomic ratio in layer A is preferably higher than or equal to 1, more preferably higher than or equal to 1.5, 2 or 3. The C/Si atomic ratio in layer A is preferably lower than or equal to 6.

The precursor compound C of the layer A has the following formula:

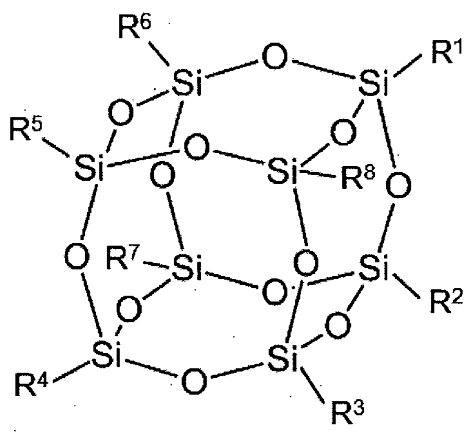

where $R^1$, $R^2$, $R^3$, $R^4$, $R^5$, $R^6$, $R^7$, $R^8$ are independently selected from the group consisting of alkyl, aryl, vinyl, acrylic, methacrylic, substituted alkyl, and $-OSiR^aR^bR^c$ in which $R^a$, $R^b$ and $R^c$ independently represent H, alkyl, vinyl, aryl, hydroxyl or a hydrolyzable group, with the proviso that $R^a$, $R^b$ and $R^c$ are not all selected from H or a hydrolyzable group.

Compound C is an organosilicon compound having a silsesquioxane core that can be structurally represented by a cage-like structure with Si-O-Si linkages and tetrahedral Si vertices. The cage structure is composed of 8 silicon atoms and 12 oxygen atoms.

Silsesquioxanes are members of polyoctahedral silsesquioxanes/polyhedral oligomeric silsesquioxanes ("POSS"). Compounds C have a unique hybrid structure, since they feature an inorganic silicate core surrounded by an organic exterior. Their chemical composition ($RSiO_{1.5}$) is intermediate between that of silica ($SiO_2$) and silicone ($R_2SiO$).

As well-known, silsesquioxanes can be synthesized by hydrolysis of organotrichlorosilanes or by condensation of the corresponding silanetriols.

These materials are solid, which is an advantage over the liquid organosilicon compounds used in the prior art to form hybrid coatings, since evaporation of present compounds C does not require an expensive injection line adapted to vaporization of liquids.

The layer A is named hybrid due to the combination of the optical properties of inorganic films and the polymer-like mechanical behavior of plastic substrates.

Compound C contains in its structure silicon, oxygen, at least one carbon atom, and optionally at least one nitrogen atom. According to one embodiment, the compound C does not comprise any Si-N group and better still does not comprise any nitrogen atom. In one embodiment, compound C does not contain any fluoroalkyl group.

The precursor compound C of the layer A preferably contains at least one silicon atom bearing at least one alkyl group, i.e., connected to the silicon atom through a carbon atom, preferably a C1-C4 alkyl group.

The O/Si atomic ratio in compound C preferably ranges from 1 to 3, preferably from 1.25 to 2. The C/Si atomic ratio in compound C is preferably higher than or equal to 1, more preferably higher than or equal to 1.5, 2 or 3. The C/Si atomic ratio in compound C is preferably lower than or equal to 6.

Diverse substituents $R^1$, $R^2$, $R^3$, $R^4$, $R^5$, $R^6$, $R^7$, $R^8$ can be attached to the Si centers. In one embodiment, all of $R^1$, $R^2$, $R^3$, $R^4$, $R^5$, $R^6$, $R^7$ and $R^8$ groups are identical. In another embodiment, all of $R^1$, $R^2$, $R^3$, $R^4$, $R^5$, $R^6$, and $R^7$ groups are identical, while $R^8$ is different from these groups.

In one embodiment, the $R^1$, $R^2$, $R^3$, $R^4$, $R^5$, $R^6$, $R^7$ and $R^8$ groups are independently selected from $-OSiR^aR^bR^c$ groups, in which $R^a$, $R^b$ and $R^c$ independently represent H, alkyl, vinyl or aryl, preferably H or alkyl. In one embodiment, the $-OSiR^aR^bR^c$ group is a $-OSiR^aR^bH$ group, with $R^a$, $R^b$ being alkyl groups, preferably identical, having from 1 to 4 carbon atoms. An example of such compound is octakis(dimethylsiloxy) silsesquioxane of formula (IV):

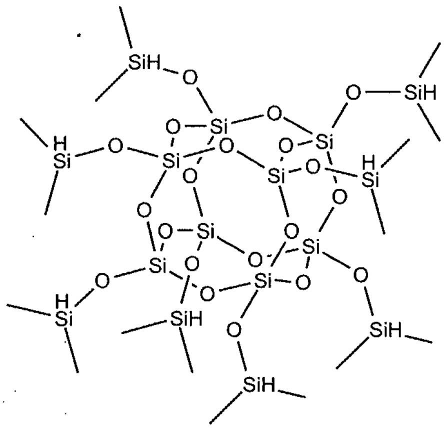

(IV)

In the present patent application, the term "alkyl" means a linear or branched, saturated or unsaturated, substituted or unsubstituted, hydrocarbon-based radical, containing from 1 to 25 carbon atoms, preferably from 1 to 12 carbon atoms, especially including acyclic groups containing from 1 to 8 carbon atoms such as methyl, ethyl, n-propyl, isopropyl, butyl and n-hexyl groups, cycloalkyl groups preferably containing from 3 to 7 carbon atoms, cycloalkylmethyl groups preferably containing from 4 to 8 carbon atoms. The alkyl group is connected to the rest of the molecule via an $sp^3$ hybridized carbon atom. The preferred alkyl group is the methyl group.

The term "substituted alkyl" as used herein includes alkyl groups as defined above, connected via an $sp^3$ carbon atom and substituted with one or more aryl groups and/or comprising one or more heteroatoms such as N, S, halogen such as F, or O. Examples that will be mentioned include arylalkyl groups such as the trityl group ($-CPh_3$), the benzyl group or the 4-methoxybenzyl group, alkoxyalkyl groups, especially dialkoxymethyl groups such as diethoxymethyl or dimethoxymethyl groups, the methoxymethyl group, groups of formula $CH_2CO_2R^{11}$, in which $R^{11}$ represents an optionally substituted alkyl or aryl group.

In one embodiment, the substituted alkyl group is a fluoroalkyl group.

In the present application, the term "aryl" denotes an aromatic monovalent carbocyclic radical comprising only one ring (for example a phenyl group) or several fused rings (for example naphthyl or terphenyl groups), which may optionally be substituted with one or more groups such as, without limitation, alkyl (for example methyl), hydroxyalkyl, aminoalkyl, hydroxyl, thiol, amino, halo (fluoro, bromo, iodo or chloro), nitro, alkylthio, alkoxy (for example methoxy), aryloxy, monoalkylamino, dialkylamino, acyl, carboxyl, alkoxycarbonyl, aryloxycarbonyl, hydroxysulfonyl, alkoxysulfonyl, aryloxysulfonyl, alkylsulfonyl, alkylsulfinyl, cyano, trifluoromethyl, tetrazolyl, carbamoyl, alkylcarbamoyl or dialkylcarbamoyl groups. Alternatively, two adjacent positions of the aromatic ring may be substituted with a methylenedioxy or ethylenedioxy group.

Non-limiting examples of hydrolyzable groups are: the acyloxy groups having the formula -O-C(O)$R^4$ where $R^4$ is a preferably C6-C12 aryl group optionally substituted with one or more functional groups, or a linear or branched and preferably C1-C6 alkyl group optionally substituted with one or more functional groups and possibly furthermore comprising one or more double bonds, such as the phenyl, methyl or ethyl groups; the aryloxy and alkoxy groups having the formula -O-$R^5$ where $R^5$ is a preferably C6-C12 aryl group optionally substituted with one or more functional groups, or a linear or branched and preferably C1-C6 alkyl group optionally substituted with one or more functional groups and possibly furthermore comprising one or more double bonds, such as the phenyl, methyl or ethyl groups; the halogens are preferably F, Cl, Br or I; the groups of formula -$NR^1R^2$ may designate an amino group $NH_2$ or an alkylamino, arylamino, dialkylamino or diarylamino group; $R^1$ and $R^2$ independently designate a hydrogen atom, a preferably C6-C12 aryl group optionally substituted with one or more functional groups, or a linear or branched and preferably C1-C6 alkyl group optionally substituted with one or more functional groups and possibly furthermore comprising one or more double bonds, such as the phenyl, methyl or ethyl groups; and the groups of formula -N($R^3$)-Si, attached to the silicon atom by way of their nitrogen atom, and their silicon atom naturally comprises three other substituents, where $R^3$ designates a preferably C6-C12 aryl group optionally substituted with one or more functional groups, or a linear or branched and preferably C1-C6 alkyl group optionally substituted with one or more functional groups and possibly furthermore comprising one or more double bonds, such as the phenyl, methyl or ethyl groups.

The preferred acyloxy group is the acetoxy group. The preferred aryloxy group is the phenoxy group. The preferred halogen is Cl. The preferred alkoxy groups are the methoxy and ethoxy groups.

Groups containing an Si-O-Si chain are not considered as being "hydrolyzable groups" in the context of the invention.

Other suitable examples of compounds C according to the invention are those in which $R^1$, $R^2$, $R^3$, $R^4$, $R^5$, $R^6$, $R^7$, $R^8$ are independently selected from alkyl groups, such as octamethyl silsesquioxane of formula (I), vinyl groups such as octavinyl silsesquioxane of formula (II), aryl groups such as octakis (aminophenyl) silsesquioxane of formula (III):

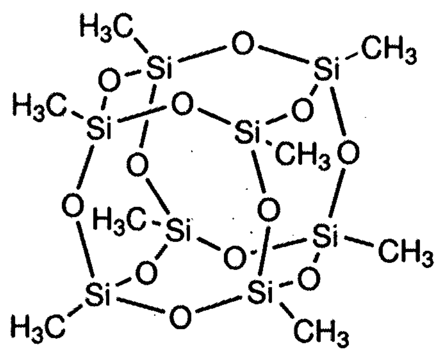
(I)
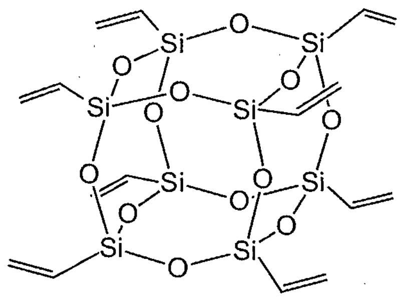
(II)

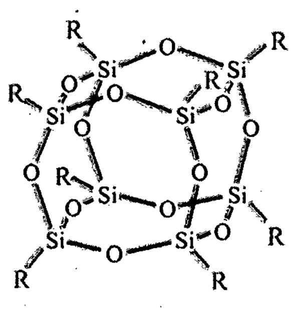
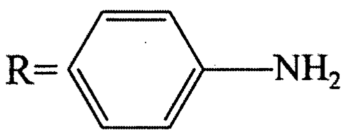
(III)

In one embodiment, the $R^1$, $R^2$, $R^3$, $R^4$, $R^5$, $R^6$, $R^7$ and $R^8$ groups are independently selected from fluoroalkyl groups.

The fluoroalkyl group of compound C can be linear or branched. It preferably comprises from 1 to 25 carbon atoms, better still from 1 to 10 or 1 to 5 and ideally from 1 to 3 carbon atoms. In one embodiment, this group is a perfluoroalkyl group.

The fluoroalkyl group of compound C is preferably a group of formula (V):

$$-(C_{x'}H_{y'}F_{z'})-(L^1)_{p'}-(C_xH_yF_z)_m-(L^2)_{p''}-R'' \qquad (V)$$

wherein R" is a hydrogen or fluorine atom, an acyl group or an alkyl group which is linear or branched, which can be substituted with one or more heteroatoms or functional groups, and which can additionally comprise one or more double bonds, $L^1$ and $L^2$ are linear or branched divalent groups which may be identical or different, x' is an integer ranging from 1 to 10, preferably from 1 to 5, better still equal to 2, y' and z' are integers such that y'+z' = 2x', x is an integer ranging from 1 to 20, preferably from 1 to 15, better still from 2 to 8, y and z are integers such that y+z = 2x, m is equal to 0 or 1, preferably 0, p' is equal to 0 or 1, preferably 0, and p" is equal to 0 or 1, preferably 0. R"' can also denote an aliphatic or aromatic acyl group, in particular the acetyl or trifluoroacetyl group.

The R" group is preferably a fluoroalkyl, better still perfluoroalkyl, group which is linear or branched. It preferably comprises from 1 to 10 carbon atoms, better still from 1 to 5 and ideally from 1 to 3 carbon atoms and represents in particular the trifluoromethyl group.

The group of formula $(C_xH_yF_z)$ is preferably a group of formula $(CF_2)_x$, wherein x is as defined previously. The group of formula $(C_{x'}H_{y'}F_{z'})$ is preferably a group of formula $(CH_2)_{x'}$, wherein x' is as defined previously.

The $L^1$ and $L^2$ groups, when they are present, can be chosen from the divalent groups L, L' and L" previously mentioned and can also represent oxyalkylene (-O-alkylene-) or alkyleneoxy (-alkylene-O-) groups which are preferably $C_2$-$C_4$ groups, better still $C_2$-$C_3$ groups. The $-(L^2)_{p''}-R''$ group is preferably a fluoroalkyl or perfluoroalkyl group, ideally a trifluoromethyl group.

In one embodiment, the fluoroalkyl group of compound C is a group of formula (V) in which m = p' = p" = z' = 0, R" = perfluoroalkyl.

Examples of fluoroalkyl groups of formula (V) are the groups of formulae:

$$F(CF_2)_c-(CH_2)_d-(CF_2)_e-(CH_2)_f- \qquad (II)$$

$$H(CH_2)_g-(CF_2)_h-(CH_2)_i-(CF_2)_j- \qquad (III)$$

wherein each of c, d, e, f, g, h, i and j denote an integer ranging from 0 to 10, at least one of c, d, e and f is other than 0, at least one of g, h, i and j is other than 0. Preferably, $2 \leq c+d+e+f \leq 12$ and/or $2 \leq g+h+i+j \leq 12$, and better still $3 \leq c+d+e+f \leq 8$ and/or $3 \leq g+h+i+j \leq 8$.

Examples of groups of formula (V) are (perfluoroalkyl)alkyl group such as the 3,3,3-trifluoropropyl group. An example of suitable compound C according to this embodiment is octakis (3,3,3-trifluoropropyl) silsesquioxane of formula (VI):

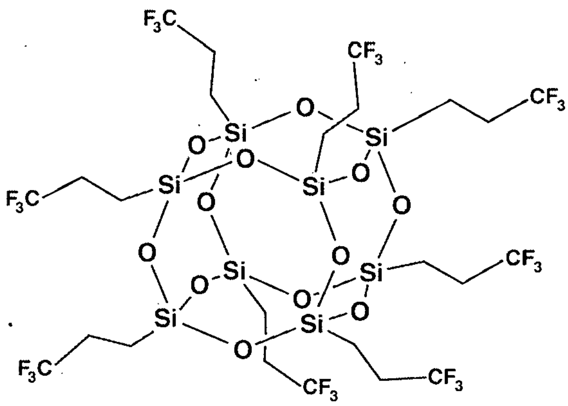

(VI)

In one embodiment, at least one of the $R^1$, $R^2$, $R^3$, $R^4$, $R^5$, $R^6$, $R^7$ and $R^8$ groups, preferably one, is an alkyl group substituted with one or more amino groups, such as, without limitation, N-(2-aminoethyl)-3-aminopropyl or 3-aminopropyl. An example of suitable compound C according to this embodiment is heptakis (isobutyl) N-(2-aminoethyl)-3-aminopropyl silsesquioxane of formula (VII):

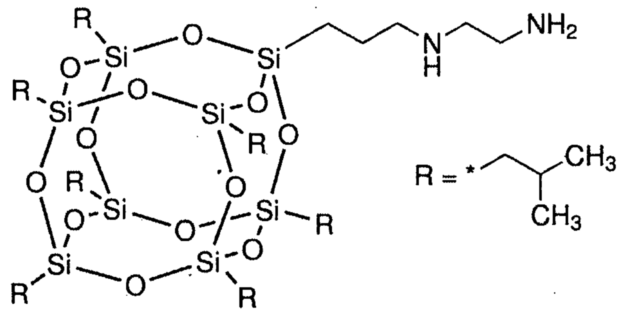

(VII)

In one embodiment, layer A is not formed from organosilicon compounds that do not contain any cage structure composed of oxygen and silicon atoms. In another embodiment, layer A is not formed from organic compounds that do not contain silicon. In further embodiments, layer A is not formed from organic compounds that are not compounds C according to the invention:

The precursor compound of the layer A is preferably introduced into the vacuum chamber in which articles according to the invention are produced in gaseous form, while controlling its flow rate. In other words, it is preferably not vaporized inside the vacuum chamber. The feed of the precursor compound of the layer A is preferably located a distance away from the exit of the ion gun which is ranging from 30 to 50 cm.

According to the invention, the layer A is preferably not formed from purely inorganic (mineral) precursor compounds and, in particular, it is preferably not formed from precursors having a metal oxide nature. Therefore, it is particularly different in this case from the "hybrid" layers described in patent US 6919134. Preferably, the layer A does not contain a separate metal oxide phase, and more preferably does not contain any inorganic compounds. In the present application, metalloid oxides are considered to be metal oxides.

The process allowing the interferential coating according to the invention to be formed is therefore much simpler than processes in which an organic compound and an inorganic compound are co-evaporated, such as the process described in patent US 6919134, for example. In practice, co-evaporation processes are very difficult to implement and difficult to control due to reproducibility problems. Specifically, the respective amounts of organic and inorganic compounds present in the deposited layer vary a lot from one operation to another.

Since the layer A is formed by vacuum deposition, it does not contain any silane hydrolysate and therefore differs from sol-gel coatings obtained by liquid processing.

The layer A preferably has a thickness ranging from 20 to 250 nm and more preferably from 50 to 200 nm. When it forms the external layer of an interferential coating, the layer A preferably has a thickness ranging from 60 to 100 nm.

The extinction coefficient (also known as attenuation coefficient) of a particular substance, denoted k, measures the loss in energy of electromagnetic radiation traversing this medium. This is the imaginary part of the complex refractive index. Preferably, the layers A according to the invention have an extinction coefficient k at 550 nm of less than or equal to $1.5x10^{-2}$, more preferably less than or equal to $10^{-2}$, even more preferably less than or equal to $10^{-3}$.

The mechanical properties of the layer A can be evaluated through nano-indentation measurements. To this end, the modulus of elasticity E of the material forming the layer A and its hardness H are measured by an instrument-controlled penetration test (indentation), according to a method described in detail in the experimental part. If need be, reference will be made to the standard NF EN ISO 14577. The hardness H characterizes the ability of the material to withstand a permanent indentation or a deformation when it is brought in contact with an indenter under a compression load. The modulus of elasticity E (or Young's modulus, or storage modulus, or tensile modulus of elasticity) makes it possible to evaluate the ability of the material to deform under the effect of a force applied.

The layer A according to the invention preferably exhibits a hardness H ≥ 2.5 GPa, preferably ≥ 4 GPa, more preferably ≥ 5 GPa.

The layer A according to the invention preferably exhibits an H/E ratio higher than or equal to 0.10; 0.11; 0.12; 0.13; 0.14; 0.15 (the higher is better), H and E being expressed with the same unit, typically MPa or GPa. .

Without being linked by a theory, it is thought that the H/E ratio expresses the fracture resistance (resistance to the propagation of the crack). The layer and the articles according to the invention are durable as they exhibit a good fracture resistance.

The modulus of elasticity E of the material forming the layer A preferably varies from 15 to 80 GPa, more preferably from 20 to 50 GPa.

Process parameters, such as oxygen ions content in the ion beam and discharge current, can be used to tune the chemical composition of layer A and consequently its mechanical properties.

Without wishing to be bound by any theory, it is believed that the ion-source-stimulated dissociation process of compound C is accompanied by a strong oxidation of the organic species converting some of them into volatile species that

cannot participate in the film growth. As a result, the decline of the organic content in the layer A is more pronounced when oxygen ions are present in the ion beam.

The critical temperature, as defined hereafter, of a coated article according to the invention is preferably higher than or equal to 70°C or 80°C. In the present application, the critical temperature of an article or a coating is defined as being the temperature from which cracks are observed to appear in the stack present on the surface of the substrate, this resulting in degradation of the coating. This higher critical temperature is due to the presence of the layer A on the surface of the article, as demonstrated in the experimental section.

Because of its good mechanical properties, the layer A, which optionally forms part of an interferential coating, may especially be applied to a single face of a semi-finished lens, generally its front face, the other face of this lens still needing to be machined and treated. The stack present on the front face of the lens will not be degraded by mechanical stress due to treatments to which the back face is subjected when coatings are deposited on this back face.

Preferably, the average reflection factor in the visible domain (400-700 nm) of an article coated with an interferential coating according to the invention, denoted $R_m$, is lower than 2.5% per face, preferably lower than 2% per face and even more preferably lower than 1% per face of the article. In one embodiment, the article comprises a substrate the two main surfaces of which are coated with an interferential coating according to the invention. The light reflection factor $R_v$ of an interferential coating according to the invention is lower than 2.5% per face, preferably lower than 2% per face, more preferably lower than 1% per face of the article, even more preferably $\leq$ 0.75 %, and more preferably still $\leq$ 0.5 %.

In the present application, the "average reflection factor" $R_m$ (average of the spectral reflection over the entire visible spectrum between 400 and 700 nm) and the "light reflection factor" $R_v$ are such as defined in standard ISO 13666:1998 and measured according to standard ISO 8980-4.

The colorimetric coefficients C* and h of the optical article of the invention in the international colorimetric CIE L*a*b* are calculated between 380 nm and 780 nm, taking the standard illuminant D65 and the observer into account (angle of incidence: 15°). The observer is a "standard observer" (10°) as defined in the international colorimetric system CIE L*a*b*.

In some aspects of the invention, the optical material has a chroma (C*) that is lower than or equal to 10 (for an angle of incidence of 15°), more preferably lower than or equal to 8, 5 4 or 3. Obtaining low residual color intensity (chroma) articles is preferable with respect to wearer's comfort viewpoint, in the cases of lenses.

In some applications, it is preferable for the main surface of the substrate to be coated with one or more functional coatings prior to the deposition of the layer A or the multilayer coating comprising layer A. These functional coatings, which are conventionally used in optics, may, without limitation, be a primer layer for improving the shock-resistance and/or adhesion of subsequent layers in the final product, an anti-abrasion and/or anti-scratch coating, a polarized coating, a photochromic coating or a tinted coating, and may in particular be a primer layer coated with an anti-abrasion and/or anti-scratch layer. The latter two coatings are described in greater detail in the patent applications WO 2008/015364 and WO 2010/109154.

The article according to the invention may also comprise coatings, formed on the interferential coating, capable of modifying the surface properties of the interferential coating, such as a hydrophobic coating and/or oleophobic coating (anti-fouling top coat) or an anti-fogging coating. These coatings are preferably deposited on the external layer of the interferential coating. They are generally lower than or equal to 10 nm in thickness, preferably from 1 to 10 nm in thickness and more preferably from 1 to 5 nm in thickness. They are described in patent applications WO 2009/047426 and WO 2011/080472, respectively.

Typically, an article according to the invention comprises a substrate successively coated with an adhesion and/or impact resistant primer layer, an anti-abrasion and/or anti-scratch coating, an optionally antistatic interferential coating according to the invention and containing a layer A generally as an external layer, and a hydrophobic and/or oleophobic coating.

The invention also relates to a process for manufacturing an article such as defined above, comprising at least the following steps:

- providing an article comprising a substrate having at least one main surface,
- depositing on said main surface of the substrate a layer A having a refractive index lower than or equal to 1.55, the deposition of said layer A being carried out by applying a bombardment with an ion beam to layer A while layer A is being formed, said ion beam preferably comprising oxygen ions,
- recovering an article comprising a substrate having a main surface coated with said layer A, said layer A being obtained by deposition of activated species issued from at least one compound C in gaseous form having the following formula:

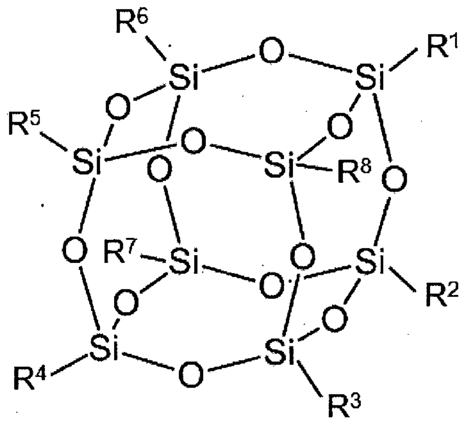

- recovering an article comprising a substrate having a main surface coated with said layer A, wherein said layer A is obtained by deposition of activated species issued from at least one compound C in gaseous form, where $R^1$, $R^2$, $R^3$, $R^4$, $R^5$, $R^6$, $R^7$, $R^8$ have the meaning indicated above.

Said layer A is preferably deposited by vacuum evaporation of at least one compound C, typically by ion-assisted thermal evaporation.

The invention is illustrated in a nonlimiting way by the following examples. Unless otherwise indicated, refractive indices are given for a wavelength of 550 nm and T = 20-25°C.

EXAMPLES

1. General procedures

The articles employed in the examples had an ORMA® substrate with a thickness of 2.0 mm (example 8) or a B270 glass slide (examples 1-7). In example 8, the lens substrate was coated in this order from the core to the outside of the substrate, with an impact resistant primer coating based on a W234™ polyurethane material disclosed in the experimental part of WO 2010/109154, and deposited over it the abrasion- and scratch-resistant coating (hard coat) disclosed in example 3 of EP 0614957 (having a refractive index of 1.48), said hard coat being coated with a multilayer antireflection coating comprising a layer A according to the invention.

For examples 1-7, the vacuum deposition chamber was a box coater (Boxer Pro, Leybold Optics) machine equipped with an electron beam source (HPE-6) that can be used for the evaporation of the precursor materials, a thermal evaporator, an end Hall ion source (ion gun) eH-1000 (from Kaufman & Robinson Inc.) for use in the preliminary phase of (IPC) preparation of the surface of the substrate by argon ion bombardment and in the ion-assisted deposition (IAD) of the layer A or of other layers, and a vapor flowmeter from MKS (MKS1150C).

For example 8, a vacuum coater BAK from Physimeca equipped with a Mark II+ ion gun from Veeco was used.

In order to vaporize the precursor compound C, a thermal evaporation technique was used. Compound C (840 ±40 mg), used under powder form, was loaded into a small round copper container covered by a custom-made copper mesh, used to reduce loss of this compound, to prevent spills of the material and homogenize its flow to substrate. The loaded container was placed on an evaporation boat and precursor vapor exited from a tube inside the machine, at a distance of about 30 cm from the ion gun. The evaporation was done in an argon atmosphere at a pressure of 0.24 mTorr. Flows of argon and optionally oxygen were introduced into the ion gun. The total gas flow was kept constant at 20 sccm.

The layers A according to the invention were formed by vacuum evaporation under ion bombardment of the compound of formula (IV) [$C_{16}H_{56}O_{20}Si_{16}$, CAS n° 125756-69-6, white powder, Mw = 1017.99 g/mol] obtained from Hybrid Plastics Inc., without heating the substrate. A comparative layer was formed without ion bombardment of precursor compound C (comparative example 1: ion gun not activated, argon atmosphere).

Comparative example 2 differs from example 2 in that the layer A was replaced with a silica layer evaporated with an electron beam, without ion assistance.

The method used to produce optical articles according to the invention (example 8) comprised introducing the substrate into the vacuum deposition chamber; a step of preheating the tubes and the vapor flowmeter (~ 20 min); a primary pumping step; then a secondary pumping step lasting 400 seconds and allowing a secondary vacuum to be obtained (~ $2\times 10^{-5}$ mbar, pressure read from a Bayard-Alpert gauge); a step of activating the surface of the substrate with a beam of argon ions (IPC: 1 minute, 100 V, 1 A, the ion gun being stopped at the end of this step); and then successively evaporating the required number of layers, and lastly a ventilation step. Layer A was deposited under ion assistance (ion

gun: 2 A, 140 V, 10 % oxygen).

Comparative example 3 differs from the stack according to inventive example 8 in that the layer A was replaced with a silica layer of the same thickness evaporated with an electron beam, without ion assistance.

The thickness of the deposited layers was controlled in real time by means of a quartz microbalance. The deposition rate was generally 11-17 nm/min. The precursor compound supply was stopped once the desired thickness has been obtained, then the ion gun was turned off. Unless otherwise indicated, the thicknesses mentioned are physical thicknesses.

## 2. Characterizations

The critical temperature of the article may be measured 24 hours after its preparation, in the way indicated in the application WO 2008/001011 for the measurement of the critical temperature, except that the relative humidity was not 50 % but > 90 %, typically 100 %. It is also possible to measure critical temperature in ambient atmosphere at 50 % relative humidity.

The measurements of refractive index n and of extinction coefficient k (defined in the application WO 2005/059603) were carried out by ellipsometry at the wavelength of 550 nm in the manner disclosed in WO 2015/166144.

A triboindenter TI 950 system (Hysitron, Inc.) equipped with a Berkovich tip was employed in order to determine the mechanical properties of the coatings (i.e., the modulus of elasticity E, the hardness H and the elastic recovery R of the material constituting the layers) by the depth-sensing indentation technique. This nano-indentation measurement is detailed in WO 2015/166144. From the measurements, the indentation cycles were analyzed using the Oliver and Pharr approach disclosed in "Improved technique for determining hardness and elastic modulus using load displacement sensing indentation experiments", Journal of Materials Research, Vol. 7, pp. 1564-1583, 1992. Subsequently, ISO 14577-4 standard was used to extract the (E) and (H) characteristics of the films.

The elastic recovery R corresponds to the portion of the given back total energy returned following the indentation test. The higher the elastic recovery, the less permanent deformation remains after the test. It was evaluated by dividing the reversible work of indentation ($W_e$) over the total work of indentation ($W_{total}$). In this study, R is determined using indentations made with a 1000 μN maximum applied load for all sample in order to obtain a contact depth greater than the round part of the tip whilst having small enough penetration depth to minimize the substrate effect:

$$R = \frac{W_e}{W_{total}} \ [\%]$$

Surface roughness was determined by optical microscopy. Information on chemical composition was obtained by FTIR.

The chemical composition and structure of the layers deposited were studied by Fourier Transform Infrared Spectroscopy (FTIR). Double-polished IR-transparent Si wafers were used as substrates. The infrared transmission spectra at normal incidence were measured with the J. A. Woollam infrared ellipsometer (IR-VASE) instrument in a range of 400-4000 $cm^{-1}$ with a resolution of 8 $cm^{-1}$.

## 3. Results

The table below indicates the deposition conditions of layer A according to the invention and comparative layers, and the results of the tests to which the articles were subjected.

| Ex. | Material evaporated | I (A) Ion gun | $O_2$ flow (%) Ion gun | Thickness of the layer (nm) | n | k | H (GPa) | E (GPa) | H/E | %R |
|---|---|---|---|---|---|---|---|---|---|---|
| Comp. 1 * | Compound (IV) | 0 | 0 | 211 | 1.42 | $6.4 \times 10^{-3}$ | | | | |
| 1 | Compound (IV) | 1 | 0 | 167 | 1.40 | $2.8 \times 10^{-2}$ | | | | |
| 2 | Compound (IV) | 2 | 0 | 127 | 1.55 | $1.5 \times 10^{-2}$ | | | | |

(continued)

| Ex. | Material evaporated | I (A) Ion gun | $O_2$ flow (%) Ion gun | Thickness of the layer (nm) | n | k | H (GPa) | E (GPa) | H/E | %R |
|---|---|---|---|---|---|---|---|---|---|---|
| 3 | Compound (IV) | 2 | 5 | 126 | 1.47 | $1.2x10^{-3}$ | | | | |
| 4 | Compound (IV) | 1 | 10 | 135 | 1.45 | $2.6x10^{-3}$ | | | | |
| 5 | Compound (IV) | 2 | 10 | 118 | 1.48 | $1.8x10^{-3}$ | 2.9 | 20 | 0.15 | 62 |
| 6 | Compound (IV) | 3 | 10 | 113 | 1.50 | $5.5x10^{-4}$ | 5.5 | 41 | 0.13 | 55 |
| 7 | Compound (IV) | 2 | 20 | 155 | 1.46 | $1.7x10^{-3}$ | | | | |
| Comp. 2* | $SiO_2$** | 0 | 0 | 206 | | 0 | 3.6 | 38 | 0.1 | 48 |

%R: Elastic recovery at 1 mN. n: refractive index at 550 nm.
I: Anode current. k: extinction coefficient at 550 nm.
$O_2$ flow (%) represents the molar concentration of $O_2$ in the gas mixture.

* No ion bombardment was performed during deposition of the layer. ** Layer A was replaced with a $SiO_2$ layer.

| Example 8 | | | Comparative example 3 | |
|---|---|---|---|---|
| | | | | |
| Substrate + primer/hard coat | | | Substrate + primer/hard coat | |
| $ZrO_2$ | 36 nm | | $ZrO_2$ | 36 nm |
| $SiO_2$ | 14.5 nm | | $SiO_2$ | 14.5 nm |
| $ZrO_2$ | 65 nm | | $ZrO_2$ | 67 nm |
| $SnO_2$ | 6.5 nm | | $SnO_2$ | 6.5 nm |
| Layer A | 77 nm | | $SiO_2$ | 86 nm |
| | | | | |
| h | 162° | | h | 155° |
| C* | 4.6 | | C* | 8 |
| Rv (%) | 0.99 | | Rv (%) | 0.66 |
| I = 2 A, 10% $O_2$. | | | | |

The layers obtained from compound C exhibit a low refractive index (n ≤ 1.55). The articles according to the invention exhibit a low mean light reflection factor in the visible range Rv, while retaining a relatively low extinction coefficient at 550 nm, and good H/E ratio and elastic recovery as compared to articles with a layer exclusively composed of silica (comparative example 2). An H/E ratio of around 0.15 indicates a very good mechanical strength.

It could be observed that when the precursor compound C was deposited by evaporation without ion assistance, the resulting layer had a quite rough, non-uniform surface structure (comparative example 1). Its mechanical properties were decreased.

It could also be observed that using oxygen ions during the ion beam assisted deposition allows to decrease the refractive index and extinction coefficient of the resulting layer A (example 2 vs. example 5).

The increase of discharge current at constant oxygen percentage in the ion beam results in lowering the

extinction coefficient and increasing the refractive index of the layer (examples 4-6).

Comparing examples 2 and 5 shows that when layer A was deposited by applying a bombardment with an ion beam comprising oxygen ions, the resulting layer A had a lower refractive index and was less absorbing (reduced k), as compared to a layer deposited by applying a bombardment with an ion beam without oxygen ions (only argon). The roughness of the resulting layer A was also reduced, and its surface was more uniform.

The chemical composition of the deposited layers was studied by FTIR. As shown in figure 1 (bottom graph), the absorption bands in the spectrum of the layer A of comparative example 1, evaporated without ion assistance, are very narrow, representing a very regular structure. The most intensive absorption bands are attributed to $CH_3$ (2966 $cm^{-1}$), Si-$CH_3$ (1257 $cm^{-1}$), Si-H (2144 $cm^{-1}$), Si-O-Si (1095 $cm^{-1}$), H-Si-O (903 $cm^{-1}$) and Si-C (771 $cm^{-1}$).

The Si-O-Si peak at 1095 $cm^{-1}$ represents the cage structure, suggesting that compound C molecules preserve their chemical composition after evaporation.

As shown in figure 1 (middle and top graphs), the FTIR spectrum of layers A with the use of ion source discharge current shows that the ion beam leads to the reduction and broadening of all original peaks.

A new absorption band at 1050 $cm^{-1}$ sitting next to the peak corresponding to the Si-O-Si bonds of the cage structure can be noticed in the spectrum of samples deposited under ion beam. This peak is assigned to the Si-O-Si bonds, which are the constituents of the network structure. It can be observed that a further increase of the discharge current changes the ratio between these two peaks, making the Si-O-Si network bonds dominant in the spectrum. This process is accompanied by a partial loss of the $CH_3$, Si-$CH_3$, and Si-H peaks. The above results suggest that the interaction of the ion source discharge with compound C during deposition causes significant chemical transformation, including the dissociation of the ending organic groups and the inorganic cage of the molecule, which is replaced with an Si-O-Si network, to an extent that depends on the process conditions.

The effect of oxygen on the chemical composition of the layer can be seen on the top graph of figure 1. Adding only a minor 5 % of oxygen flow into the working gas mixture for the ion beam depletes the signal from bonds with organic elements (example 3). The Si-O-Si network band overlaps the cage absorption band and cannot be discernible anymore. Further increase of the oxygen percentage intensifies the decrease of the signal from organic bonds and makes the Si-O-Si network band narrower.

It was observed that the critical temperature of the article of example 8 was higher than that of comparative example 3 (+ 10°C), showing that replacing a silica layer with a layer A according to the invention allows to improve the thermal resistance of the optical article.

Therefore, the invention provides new materials for making optical layers, which combines a low refractive index and interesting mechanical and durability properties.

## Claims

1. An article comprising a substrate having at least one main surface coated with a layer A having a refractive index lower than or equal to 1.55, **characterized in that** said layer A was obtained by deposition of activated species issued from at least one compound C in gaseous form having the following formula:

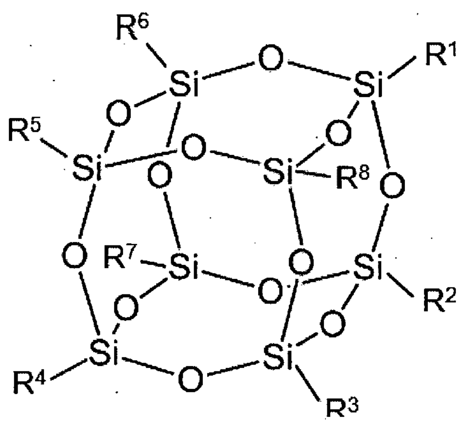

where $R^1$, $R^2$, $R^3$, $R^4$, $R^5$, $R^6$, $R^7$, $R^8$ are independently selected from the group consisting of alkyl, aryl, vinyl, acrylic, methacrylic, alkyl substituted with one or more heteroatoms, and -OSi$R^aR^bR^c$ in which $R^a$, $R^b$ and $R^c$ independently represent H, alkyl, vinyl, aryl, hydroxyl or a hydrolyzable group, with the proviso that $R^a$, $R^b$ and $R^c$ are not all selected from H or a hydrolyzable group, the deposition of said layer A being carried out by applying a bombardment with an ion

beam to layer A while layer A is being formed.

**2.** The article as claimed in any one of the preceding claims, wherein said deposition of said layer A is carried out by applying a bombardment with an ion beam comprising oxygen ions.

**3.** The article as claimed in any one of the preceding claims, wherein the $R^1$, $R^2$, $R^3$, $R^4$, $R^5$, $R^6$, $R^7$ and $R^8$ groups are independently selected from $-OSiR^aR^bR^c$ groups, in which $R^a$, $R^b$ and $R^c$ independently represent H, alkyl, vinyl or aryl.

**4.** The article as claimed in any one of the preceding claims, wherein compound C comprises at least one silicon atom bearing at least one alkyl group.

**5.** The article as claimed in any one of the preceding claims, wherein layer A has a refractive index lower than or equal to 1.5, preferably lower than or equal to 1.48.

**6.** The article as claimed in any one of the preceding claims, wherein the atomic percentage of carbon atoms in layer A ranges from 20 % to 35 %.

**7.** The article as claimed in any one of the preceding claims, wherein the C/Si atomic ratio in layer A is higher than or equal to 1.

**8.** The article as claimed in any one of the preceding claims, wherein layer A is not formed from purely inorganic precursor compounds.

**9.** The article as claimed in any one of the preceding claims, wherein layer A has a thickness ranging from 20 to 250 nm and preferably from 50 to 200 nm.

**10.** The article as claimed in any one of the preceding claims, wherein it is an optical lens, preferably an ophthalmic lens.

**11.** The article as claimed in any one of the preceding claims, wherein layer A is a layer of a multilayer interferential coating.

**12.** The article as claimed in claim 11, wherein the interferential coating is an antireflection coating.

**13.** A process for manufacturing an article as claimed in any one of the preceding claims, comprising at least the following steps:

- providing an article comprising a substrate having at least one main surface,
- depositing on said main surface of the substrate a layer A having a refractive index lower than or equal to 1.55, the deposition of said layer A being carried out by applying a bombardment with an ion beam to layer A while layer A is being formed,
- recovering an article comprising a substrate having a main surface coated with said layer A, wherein said layer A is obtained by deposition of activated species issued from at least one compound C in gaseous form having the following formula:

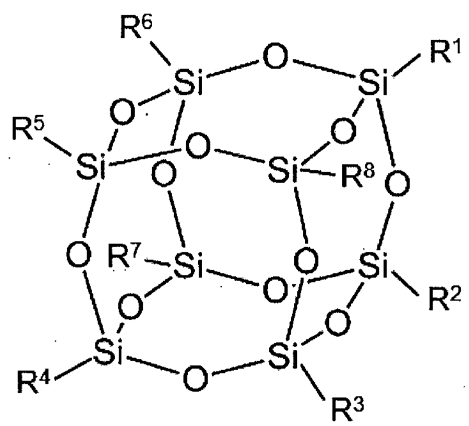

where $R^1$, $R^2$, $R^3$, $R^4$, $R^5$, $R^6$, $R^7$, $R^8$ have the meaning indicated in claim 1.

**14.** The process as claimed in claim 13, wherein said layer A is deposited by vacuum evaporation of at least one compound C.

**15.** The process as claimed in claim 13 or 14, wherein said ion beam comprises oxygen ions.

**Patentansprüche**

**1.** Gegenstand umfassend ein Substrat mit wenigstens einer Hauptoberfläche, die mit einer Schicht A beschichtet ist, die einen Brechungsindex von kleiner als oder gleich 1,55 aufweist, **dadurch gekennzeichnet, dass** die Schicht A durch Abscheidung von aktivierten Spezies erhalten worden ist, die aus wenigstens einer Verbindung C in gasförmiger Form mit der folgenden Formel ausgegeben worden sind:

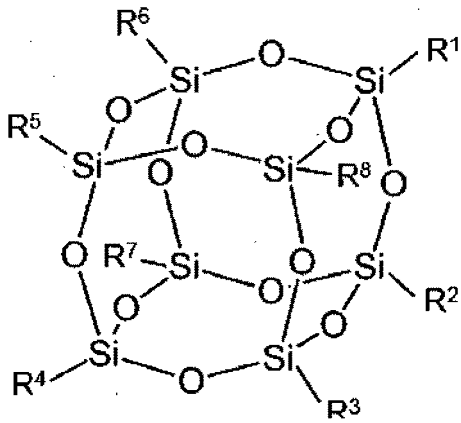

wobei $R^1$, $R^2$, $R^3$, $R^4$, $R^5$, $R^6$, $R^7$, $R^8$ unabhängig ausgewählt sind aus der Gruppe bestehend aus Alkyl, Aryl, Vinyl, Acryl, Methacryl, Alkyl substituiert mit einem oder mehreren Heteroatomen, und $-OSiR^aR^bR^c$, wobei $R^a$, $R^b$ und $R^c$ unabhängig H, Alkyl, Vinyl, Aryl, Hydroxy oder eine hydrolysierbare Gruppe darstellen, mit der Maßgabe, dass $R^a$, $R^b$ und $R^c$ nicht alle ausgewählt sind aus H oder einer hydrolysierbaren Gruppe, wobei die Abscheidung der Schicht A durch Anwendung von Beschuss mit einem Ionenstrahl auf die Schicht A, während die Schicht A gebildet wird, durchgeführt wird.

**2.** Gegenstand nach einem der vorstehenden Ansprüche, wobei die Abscheidung der Schicht A durch Anwendung von Beschuss mit einem Ionenstrahl, der Sauerstoffionen umfasst, durchgeführt wird.

**3.** Gegenstand nach einem der vorstehenden Ansprüche, wobei die Gruppen $R^1$, $R^2$, $R^3$, $R^4$, $R^5$, $R^6$, $R^7$ und $R^8$ unabhängig ausgewählt sind aus $-OSiR^aR^bR^c$-Gruppen, wobei $R^a$, $R^b$ und $R^c$ unabhängig H, Alkyl, Vinyl oder Aryl darstellen.

**4.** Gegenstand nach einem der vorstehenden Ansprüche, wobei die Verbindung C wenigstens ein Siliciumatom umfasst, das wenigstens eine Alkylgruppe trägt.

**5.** Gegenstand nach einem der vorstehenden Ansprüche, wobei die Schicht A einen Brechungsindex von kleiner als oder gleich 1,5, vorzugsweise kleiner als oder gleich 1,48, aufweist.

**6.** Gegenstand nach einem der vorstehenden Ansprüche, wobei der Atomprozentanteil an Kohlenstoffatomen in der Schicht A in dem Bereich von 20 % bis 35 % liegt.

**7.** Gegenstand nach einem der vorstehenden Ansprüche, wobei das C/Si-Atomverhältnis in der Schicht A größer oder gleich 1 ist.

**8.** Gegenstand nach einem der vorstehenden Ansprüche, wobei die Schicht A nicht aus rein anorganischen Vorläuferverbindungen gebildet ist.

**9.** Gegenstand nach einem der vorstehenden Ansprüche, wobei die Schicht A eine Dicke in dem Bereich von 20 bis 250 nm und vorzugsweise von 50 bis 200 nm aufweist.

**10.** Gegenstand nach einem der vorstehenden Ansprüche, die eine optische Linse, vorzugsweise eine ophthalmische Linse, ist.

**11.** Gegenstand nach einem der vorstehenden Ansprüche, wobei die Schicht A eine Schicht einer mehrschichtigen Interferenzbeschichtung ist.

**12.** Gegenstand nach Anspruch 11, wobei die Interferenzbeschichtung eine Antireflexbeschichtung ist.

**13.** Verfahren zur Herstellung eines Gegenstands nach einem der vorstehenden Ansprüche, umfassend wenigstens die folgenden Schritte:

- Bereitstellen eines Gegenstands, der ein Substrat mit wenigstens einer Hauptoberfläche umfasst,
- Abscheiden einer Schicht A mit einem Brechungsindex von kleiner als oder gleich 1,55 auf die Hauptoberfläche des Substrats, wobei das Abscheiden der Schicht A durch Anwendung von Beschuss mit einem Ionenstrahl auf die Schicht A, während Schicht A gebildet wird, durchgeführt wird,
- Erhalten eines Gegenstands, der ein Substrat mit einer Hauptoberfläche umfasst, die mit der Schicht A beschichtet ist, wobei die Schicht A durch Abscheidung von aktivierten Spezies erhalten wird, die aus wenigstens einer Verbindung C in gasförmiger Form mit der folgenden Formel ausgegeben werden:

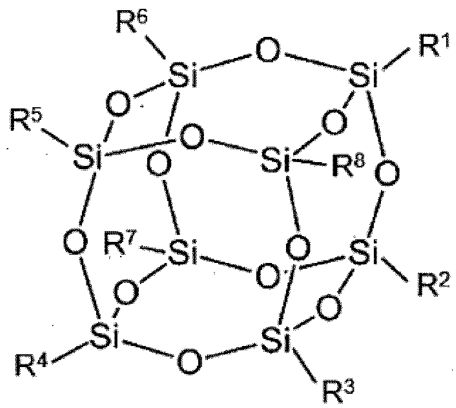

wobei $R^1$, $R^2$, $R^3$, $R^4$, $R^5$, $R^6$, $R^7$, $R^8$ die in Anspruch 1 gegebene Bedeutung haben.

**14.** Verfahren nach Anspruch 13, wobei die Schicht A durch Vakuumverdampfung wenigstens einer Verbindung C abgeschieden wird.

**15.** Verfahren nach Anspruch 13 oder 14, wobei der Ionenstrahl Sauerstoffionen umfasst.

## Revendications

**1.** Article comprenant un substrat ayant au moins une surface principale revêtue par une couche A ayant un indice de réfraction inférieur ou égal à 1,55, **caractérisé en ce que**
ladite couche A a été obtenue par dépôt d'espèces activées issues d'au moins un composé C sous forme gazeuse ayant la formule suivante :

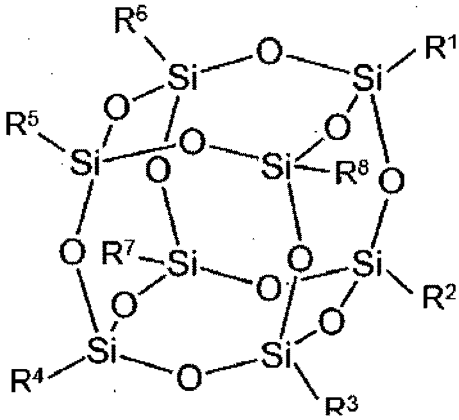

où $R^1$, $R^2$, $R^3$, $R^4$, $R^5$, $R^6$, $R^7$, $R^8$ sont indépendamment choisis dans le groupe constitué d'alkyle, aryle, vinyle, acrylique, méthacrylique, alkyle substitué par un ou plusieurs hétéroatomes, et $-OSiR^aR^bR^c$ dans lequel $R^a$, $R^b$ et $R^c$ représentent indépendamment H, alkyle, vinyle, aryle, hydroxyle ou un groupe hydrolysable, à condition que $R^a$, $R^b$ et $R^c$ ne soient pas tous choisis parmi H ou un groupe hydrolysable, le dépôt de ladite couche A étant réalisé par application d'un bombardement par faisceau d'ions sur la couche A tandis que la couche A est en train d'être formée.

2. Article selon l'une quelconque des revendications précédentes, dans lequel ledit dépôt de ladite couche A est effectué par application d'un bombardement avec un faisceau d'ions comprenant des ions oxygène.

3. Article selon l'une quelconque des revendications précédentes, dans lequel les groupes $R^1$, $R^2$, $R^3$, $R^4$, $R^5$, $R^6$, $R^7$ et $R^8$ sont choisis indépendamment parmi les groupes $-OSiR^aR^bR^c$, dans lequel $R^a$, $R^b$ et $R^c$ représentent indépendamment H, alkyle, vinyle ou aryle.

4. Article selon l'une quelconque des revendications précédentes, dans lequel le composé C comprend au moins un atome de silicium portant au moins un groupe alkyle.

5. Article selon l'une quelconque des revendications précédentes, dans lequel la couche A a un indice de réfraction inférieur ou égal à 1,5, de préférence inférieur ou égal à 1,48.

6. Article selon l'une quelconque des revendications précédentes, dans lequel le pourcentage atomique d'atomes de carbone dans la couche A est dans la plage de 20 % à 35 %.

7. Article selon l'une quelconque des revendications précédentes, dans lequel le rapport atomique C/Si dans la couche A est supérieur ou égal à 1.

8. Article selon l'une quelconque des revendications précédentes, dans lequel la couche A n'est pas formée à partir de composés précurseurs purement inorganiques.

9. Article selon l'une quelconque des revendications précédentes, dans lequel la couche A a une épaisseur dans la plage de 20 à 250 nm et de préférence de 50 à 200 nm.

10. Article selon l'une quelconque des revendications précédentes, dans lequel l'article est une lentille optique, préférablement une lentille ophtalmique.

11. Article selon l'une quelconque des revendications précédentes, dans lequel la couche A est une couche d'un revêtement interférentiel multicouche.

12. Article selon la revendication 11, dans lequel le revêtement interférentiel est un revêtement antireflet.

13. Procédé de fabrication d'un article selon l'une quelconque des revendications précédentes, comprenant au moins les étapes suivantes :

- fourniture d'un article comprenant un substrat ayant au moins une surface principale,

- dépôt sur ladite surface principale du substrat d'une couche A ayant un indice de réfraction inférieur ou égal à 1,55, le dépôt de ladite couche A étant réalisé par application d'un bombardement par faisceau d'ions de la couche A tandis que la couche A est en train d'être formée,
- récupération d'un article comprenant un substrat ayant une surface principale revêtue de ladite couche A, dans lequel ladite couche A est obtenue par dépôt d'espèces activées issues d'au moins un composé C sous forme gazeuse ayant la formule suivante :

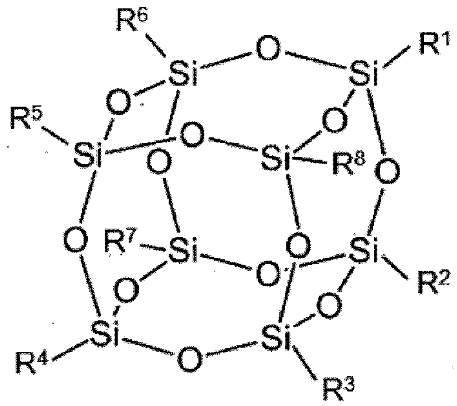

où $R^1$, $R^2$, $R^3$, $R^4$, $R^5$, $R^6$, $R^7$, $R^8$ ont la signification indiquée dans la revendication 1.

**14.** Procédé selon la revendication 13, dans lequel ladite couche A est déposée par évaporation sous vide d'au moins un composé C.

**15.** Procédé selon la revendication 13 ou 14, dans lequel ledit faisceau d'ions comprend des ions oxygène.

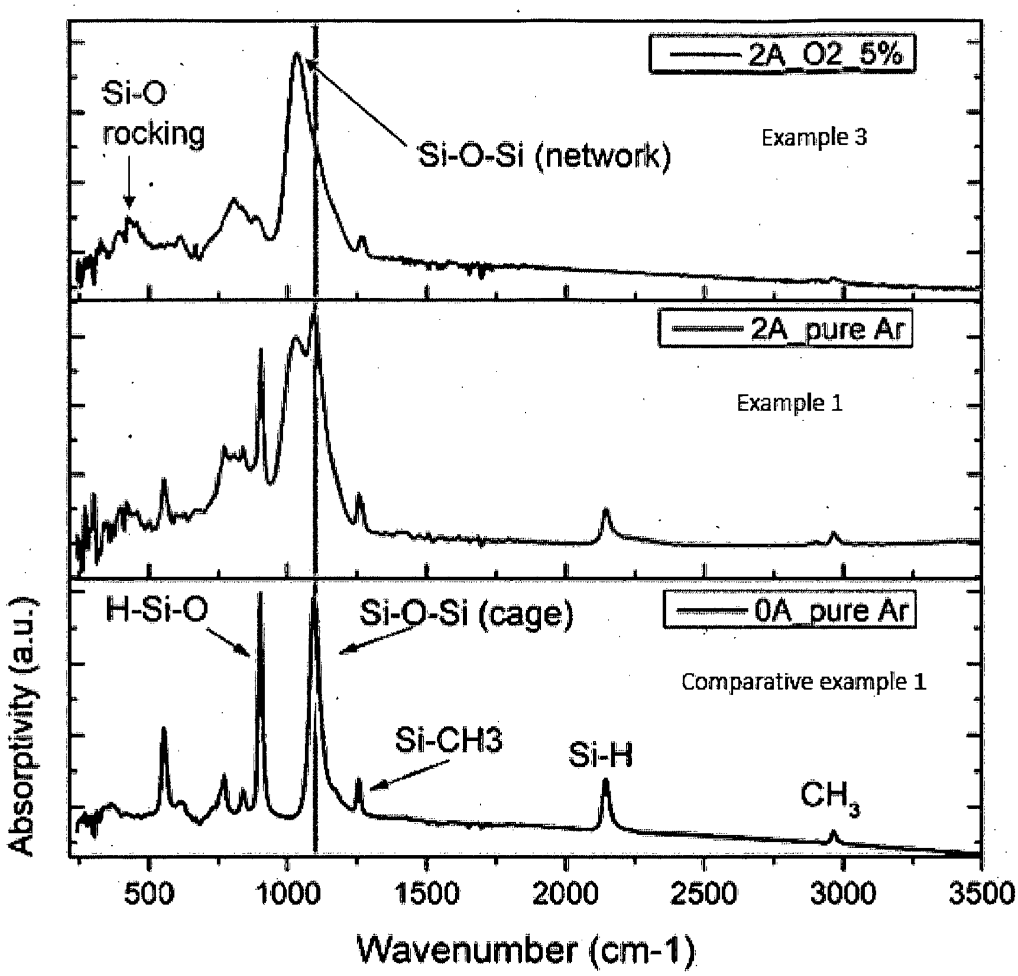
2A_O2_5%
Si-O rocking
Si-O-Si (network)
Example 3
2A_pure Ar
Example 1
0A_pure Ar
H-Si-O
Si-O-Si (cage)
Comparative example 1
Si-CH3
Si-H
$CH_3$
Absorptivity (a.u.)
500
1000
1500
2000
2500
3000
3500
Wavenumber (cm-1)

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013098531 A
- WO 2014199103 A
- WO 2017021670 A
- WO 2020161128 A
- EP 3337859 A
- EP 1271634 A
- EP 2242730 A
- US 9939557 B
- US 8163357 B2
- WO 2008062142 A
- WO 2010109154 A
- WO 2018192998 A
- US 2008206470 A
- US 5508368 A
- US 6919134 B
- WO 2008015364 A
- WO 2009047426 A
- WO 2011080472 A
- EP 0614957 A
- WO 2008001011 A
- WO 2005059603 A
- WO 2015166144 A


### Non-patent literature cited in the description


- Thin Film Processes'' and ''Thin Film Processes II. Academic Press, 1978
- Improved technique for determining hardness and elastic modulus using load displacement sensing indentation experiments. *Journal of Materials Research*, 1992, vol. 7, 1564-1583